# EUROPÄISCHE PATENTANMELDUNG

(11) **EP 2 692 992 A2**
(43) Veröffentlichungstag der Anmeldung: **05.02.2014**
(21) Anmeldenummer: 13176264.3
(22) Anmeldetag: 12.07.2013
(51) Int. Cl.: F01D 5/28

(54) **Lauf- oder Leitbeschaufelung aus Faserverbundverkstoff für eine Turbine und zugehöriges Herstellungsverfahren einer Turbinenbeschaufelung**

(30) Priorität: 01.08.2012 DE 102012213596
(71) Anmelder: Siemens Aktiengesellschaft, 80333 München (DE)
(72) Erfinder: Eder, Anett, 91058 Erlangen (DE); Seidel, Christian, 90571 Schwaig (DE); Völker, Lutz, 02826 Görlitz (DE); Zeininger, Heinrich, 90587 Obermichelbach (DE)

(57) **Zusammenfassung**

Die vorliegende Erfindung betrifft eine Schaufel einer Laufbeschaufelung oder einer Leitbeschaufelung, insbesondere einer Beschaufelung einer Turbinenstufe einer Turbine, wobei die Schaufel als Werkstoff einen Faserverbundwerkstoff umfasst. Ferner betrifft die Erfindung eine Laufbeschaufelung oder Leitbeschaufelung, insbesondere der Beschaufelung einer Turbinenstufe einer Turbine, sowie ein Verfahren zur Herstellung zumindest einer Schaufel einer Laufbeschaufelung oder einer Leitbeschaufelung, insbesondere einer Beschaufelung einer Turbinenstufe einer Turbine. Dazu offenbart die Erfindung eine Verbesserung einer Schaufel, Laufbeschaufelung oder Leitbeschaufelung einer Turbine gegen Tropfenerosion. Dazu wird eine Kombination aus einem energieabsorbierendem Material mit einem hochelastischen Elastomerbereich in oder auf der Schaufel, die bevorzugt aus Faserverbundkunststoff ist, vorgeschlagen.

## Beschreibung

Die vorliegende Erfindung betrifft eine Schaufel einer Laufbeschaufelung oder einer Leitbeschaufelung, insbesondere einer Beschaufelung einer Turbinenstufe einer Turbine, wobei die Schaufel als Werkstoff einen Faserverbundwerkstoff umfasst. Ferner betrifft die Erfindung eine Laufbeschaufelung oder Leitbeschaufelung, insbesondere der Beschaufelung einer Turbinenstufe einer Turbine, sowie ein Verfahren zur Herstellung zumindest einer Schaufel einer Laufbeschaufelung oder einer Leitbeschaufelung, insbesondere einer Beschaufelung einer Turbinenstufe einer Turbine.

Um beispielsweise die Leistung und den Wirkungsgrad zukünftiger Turbinen, insbesondere von Dampfturbinen, zu steigern, wird angestrebt, die Durchströmfläche, insbesondere der letzten Turbinenstufe, beziehungsweise die Drehzahl der Turbine zu vergrößern. Herkömmliche Schaufelwerkstoffe, wie Stahl oder Titan, stoßen hier bereits an ihre physikalischen Grenzen, so dass derzeit der Einsatz von Faserverbundwerkstoffen mit hohen spezifischen, insbesondere gewichtsbezogenen, Festigkeiten für die Turbinenstufen, insbesondere die hinteren, kühleren Turbinenstufen in Erwägung gezogen wird. Die größte Herausforderung ist dabei die zuverlässige Erosionsfestigkeit des neuen Werkstoffes. So wird die Lebensdauer von Endstufenlaufschaufeln einer Kondensationsdampfturbine durch die Tropfenschlagserosionsbeanspruchung bestimmt. Durch die Tropfenschlagerosion wird selbst gehärteter Stahl abgetragen. Beim Einsatz von Faserverbundwerkstoffen mit einem angestrebten höheren Produkt aus Fläche mal Drehzahl steigt die Erosionsbelastung. Wassertropfen mit einer Größe von ca. 25-400 µm, insbesondere von ca.100 µm, und einer Relativ-Geschwindigkeit von bis zu 600 m/s, insbesondere von bis zu 490 m/s können dabei auf der Schaufeloberfläche auftreffen.

Schaufeln aus reinem Faserverbundwerkstoff werden jedoch schon bei geringeren Geschwindigkeiten der Wassertropfen in wenigen Minuten zerstört. Für Stahl/Titan-Schaufeln wird das Problem mit Maßnahmen wie Absaugschlitze, Härtung der Eintrittskanten, etc. begegnet, um die Stahl-Laufschaufeln über ihre Lebensdauer nicht übermäßig zu schädigen.

Der Erfindung liegt die Aufgabe zugrunde, eine Schaufel einer Laufbeschaufelung oder einer Leitbeschaufelung sowie eine Laufbeschaufelung oder eine Leitbeschaufelung einer Turbinenstufe einer Turbine bereitzustellen, die als Grundwerkstoff einen Faserverbundwerkstoff aufweist, eine hohe Rückprallelastizität hat und die trotz einer hohen Beanspruchung, insbesondere einer Tropfenschlagserosionsbeanspruchung, beständig bleibt, eine hohe Lebensdauer aufweist und bei der der Materialabtrag durch die Tropfenschlagerosionsbeanspruchung vermindert ist. Ferner soll ein Verfahren zur Herstellung zumindest einer derartigen Schaufel einer Laufbeschaufelung oder einer Leitbeschaufelung, insbesondere einer Beschaufelung einer Turbinenstufe einer Turbine, geschaffen werden.

Diese Aufgaben werden erfindungsgemäß durch eine Schaufel einer Laufbeschaufelung oder einer Leitbeschaufelung mit den Merkmalen gemäß dem unabhängigen Patentanspruch 1, durch eine Laufbeschaufelung oder Leitbeschaufelung, insbesondere der Beschaufelung einer Turbinenstufe einer Turbine, mit den Merkmalen gemäß dem unabhängigen Patentanspruch 10 sowie durch ein Verfahren zur Herstellung zumindest einer Schaufel einer Laufbeschaufelung oder einer Leitbeschaufelung mit den Merkmalen gemäß dem unabhängigen Patentanspruch 11 gelöst.

Weitere Merkmale und Details der Erfindung ergeben sich aus den Unteransprüchen und der Beschreibung. Dabei gelten Merkmale und Details, die im Zusammenhang mit der erfindungsgemäßen Schaufel beschrieben sind, selbstverständlich auch im Zusammenhang mit der erfindungsgemäßen Laufbeschaufelung oder Leitbeschaufelung sowie dem Verfahren, und jeweils umgekehrt, so dass bezüglich der Offenbarung zu den einzelnen Erfindungsaspekten stets wechselseitig Bezug genommen werden kann.

Die Aufgabe wird gemäß dem ersten Aspekt der Erfindung bei einer Schaufel einer Laufbeschaufelung oder einer Leitbeschaufelung der eingangs genannten Art dadurch gelöst, dass die Schaufel wenigstens einen hochelastischen Elastomerbereich und einen Bereich mit energieabsorbierendem Material aufweist. Eine Schaufel einer Laufbeschaufelung oder einer Leitbeschaufelung, insbesondere einer Beschaufelung einer Turbinenstufe einer Turbine, wobei die Schaufel als Werkstoff einen Faserverbundwerkstoff und wenigstens einen hochelastischen Elastomerbereich und einen Bereich mit energieabsorbierendem Material aufweist, weist eine hohe Lebensdauer und/oder eine hohe Rückprall-Elastizität bei einer Beanspruchung, insbesondere bei einer Tropfenschlagserosionsbeanspruchung, auf. Eine derartig ausgebildete Schaufel einer Laufbeschaufelung oder Leitbeschaufelung, insbesondere einer Turbinenstufe einer Turbine, ist ferner durch keinen Materialabtrag bei einer Tropfenschlagerosionsbeanspruchung gekennzeichnet. Durch den wenigstens einen hochelastischen Elastomerbereich und den Bereich mit energieabsorbierendem Material weist die Schaufel vorteilhafterweise neben der hohen Rückprallelastizität auch ein hohes elastisches Relaxationsvermögen sowie eine geringe Dämpfung auf.

Insbesondere kommt es im Zusammenhang mit der Tropfenerosion auf eine hohe Rückprallelastizität an, durch die die Dämpfung gering und die innere Erwärmung bei dynamischen Belastungen entsprechend niedrig ist. Die Rückprall-Elastizität ist das Verhältnis der wieder gewonnenen Energie zur aufgewendeten Energie in Prozent. Je größer die Elastizität, desto weniger Verformungsenergie wird in Wärme umgewandelt. Die Wärme, die nicht an die Umgebung abgegeben werden kann, würde das Gummimaterial während der dynamischen Belastung aufheizen.

Eine derartige Schaufel, die als Grundwerkstoff einen Faserverbundwerkstoff aufweist und die zusätzlich wenigstens einen hochelastischen Elastomerbereich und einen Bereich mit energieabsorbierendem Material aufweist, ist leicht und kann deshalb relativ groß ausgebildet sein. Der hochelastische Elastomerbereich kann als Schicht ausgebildet sein und verhindert eine übermäßige Beschädigung der Schaufel. Das Elastomer des hochelastischen Elastomerbereichs kann sich bei Zug- und Druckbelastung elastisch verformen, findet aber danach wieder in seine ursprüngliche, unverformte Gestalt zurück. D.h., die auftreffenden Wassertropfen verformen die Oberfläche der Schaufel nur kurzfristig. Eine Schicht aus hochelastischem Elastomer nimmt aufgrund ihrer Elastizität nach dem Aufschlag eines Wassertropfens anschließend wieder ihre Ausgangsform ein. Nach einer vorteilhaften Ausführungsform der Erfindung ist die Oberfläche einer Schaufel, Laufbeschaufelung oder Leitbeschaufelung einer Turbine mit einem Energie absorbierenden Material beschichtet, beispielsweise mit Metall.

Bei der hohen dynamischen Belastung durch Tropfen, insbesondere Wassertropfen der Größe von 25 bis 400 µm und einer Geschwindigkeit bis zu 600 m/s wird durch eine Oberflächenschicht aus energieabsorbierendem Material oder durch eine Metallschicht das Risiko von Mikrorissen vermindert.

Besonders geeignet sind dabei Oberflächenschichten aus Energie absorbierendem Material mit einer Dicke zwischen 0,01 und 0,1 mm, insbesondere zwischen 0,02 und 0,09 mm und besonders bevorzugt mit einer Dicke von 0,03 bis 0,08 mm.

Beispielsweise wird als Energie absorbierendes Material ein Metall, eine Metalllegierung, eine Keramik, oder ein besonders harter Kunststoff eingesetzt. Insbesondere bevorzugt ist der Einsatz eines harten Metalls oder einer harten Metalllegierung wie beispielsweise Titan oder Stahl eingesetzt. Es können aber auch Carbonmaterialien oder sonstige Energieabsorbierende Materialien als Oberflächenbeschichtung und zum Anprallschutz der Schaufel, Laufbeschaufelung oder Leitbeschaufelung einer Turbine eingesetzt werden.

Im Sinne der Erfindung kann die Schaufel Teil einer Laufbeschaufelung oder die Leitbeschaufelung einer Turbine, beispielsweise einer Gas- oder Dampfturbine, sein. Die Schaufel muss aber nicht zwangläufig die Schaufel einer Turbine sein. So kann die Schaufel beispielsweise auch Teil eines Propellers eines Flugzeuges oder eines Hubschraubers bzw. einer Lüftungsbeschaufelung sein.

Nach einer vorteilhaften Ausführungsform der Erfindung kann bei der Schaufel vorgesehen sein, dass der Faserverbundwerkstoff der Schaufel ein kohlenstofffaserverstärkter Verbundwerkstoff ist. Eine Schaufel aus einem derartigen Grundwerkstoff, die zusätzlich wenigstens einen hochelastische Elastomerbereich und einen Bereich mit einem energieabsorbierenden Material aufweist, ist besonders leicht und stabil ausgebildet. Ferner weist eine derartig ausgebildete Schaufel aufgrund des Grundwerkstoffes eine besonders hohe Zugfestigkeit und aufgrund der Beschichtung eine hohe Beständigkeit bei einer Tropfenschlagerosionsbeanspruchung auf.

Zweckmäßigerweise ist der hochelastische Elastomerbereich integraler Bestandteil der Schaufel. Integraler Bestandteil bedeutet, dass der hochelastische Elastomerbereich bei der Herstellung der Schaufel monolithisch mit dieser hergestellt worden ist. Besonders bevorzugt ist eine Schaufel, bei der der hochelastische Elastomerbereich auf die Schaufeloberfläche der Schaufel auflaminiert oder in den Faserverbundwerkstoff der Schaufel einlaminiert ist. D.h., sowohl beim Auflaminieren, als auch beim Einlaminieren wird der hochelastische Elastomerbereich während des Herstellens der Schaufel mit dieser bzw. dem Faserverbundwerkstoff der Schaufel monolithisch verbunden.

Gemäß einer besonders zweckmäßigen Weiterbildung der Erfindung kann bei der Schaufel vorgesehen sein, dass der hochelastische Elastomerbereich aus vulkanisiertem Kautschuk ausgebildet ist oder vulkanisierten Kautschuk umfasst. Dabei kann sowohl Naturkautschuk, als auch synthetischer Kautschuk vorgesehen sein. Ein aus vulkanisiertem Kautschuk ausgebildeter bzw. eine vulkanisierten Kautschuk umfassender hochelastischer Bereich ermöglicht eine hohe Energieaufnahme der Schaufel, insbesondere wenn der Bereich als Schicht vorliegt. Insbesondere ist eine Schaufel, die eine vulkanisierte Kautschukschicht aufweist, besonders zugfest und hoch elastisch.

Gemäß einer besonders zweckmäßigen Weiterbildung der Erfindung kann bei der Schaufel vorgesehen sein, dass der vulkanisierte Kautschuk des Elastomerbereichs ein Polyurethan, ein Ethylen-Propylen-Kautschuk, ein Ethylen-Propylen-DienKautschuk, ein Styrol-Butadien-Kautschuk, ein ButylKautschuk, ein Chloropren-Kautschuk, ein Epichlorhydrin-Kautschuk, ein Nitril-Kautschuk, ein hydrierter Nitril-Kautschuk, ein Polyacrylat-Kautschuk, ein Ethylen-Acrylat-Kautschuk, ein Fluor-Kautschuk, ein Silikon-Kautschuk und/oder ein Fluorsilikon ist. Polyurethan-Kautschuk zeichnet sich durch eine hervorragende Zugfestigkeit, Reiß- und Verschleißfestigkeit aus. Ethylen-Propylen-Kautschuke und Ethylen-Propylen-Dien-Kautschuke weisen unter anderem eine gute Wärme- und Oxidationsbeständigkeit, eine gute Ozon- und Witterungsbeständigkeit sowie eine gute Chemikalienbeständigkeit auf. Insbesondere zeichnen sich derartige Kautschuke, insbesondere Nitril-Kautschuk (NBR) und hydrierter Nitril-Kautschuk (HNBR), durch eine gute Feuchtigkeitsbeständigkeit und eine hohe Elastizität aus. Hydrierter Nitril-Kautschuk ist dabei bis zu einer Temperatur von 140-150°C temperaturbeständig, Nitrilkautschuk bis zu einer Temperatur von 110-120°C. Ferner sind Ethylen-Propylen-Kautschuke und Ethylen-Propylen-Dien-Kautschuke hochflexibel und langlebig.

Gemäß einer weiteren besonders zweckmäßigen Weiterbildung der Erfindung kann bei der Schaufel vorgesehen sein, dass das Elastomer des hochelastischen Elastomerbereichs eine Rückprallelastizität von mindestens 35%, vorzugsweise mindestens 40%.

Die Schaufel hat bevorzugt eine Shore-Härte von wenigstens 60, vorzugsweise von wenigstens 70, und/oder eine Reißdehnung von 200% bis 1000%, insbesondere eine Reißdehnung von 300% bis 800%, und/oder eine Reißfestigkeit von wenigstens 25 N/mm², vorzugsweise von 40-50 N/mm², und/oder einen Weiterreißwiderstand von 10-50 N/mm, vorzugsweise von 20-50 N/mm. Polyurethan-Kautschuke oder Ethylen-Propylen-Kautschuke bzw. Ethylen-Propylen-Dien-Kautschuke weisen eine Reißdehnung von 300 -800 % und mehr auf, wodurch diese besonders geeignet sind als Bestandteil des Elastomerbereichs oder der Elastomerschicht der Schaufel. Derartige Elastomere zeichnen sich neben ihrer hohen Reißdehnung durch eine gute Reißfestigkeit aus. Die Reißfestigkeit der genannten Elastomere liegt bei wenigstens 25 N/mm². Insbesondere ist es vorteilhaft, wenn die eingesetzten Kautschuke Reißfestigkeiten im Bereich von 40 bis 50 N/mm² aufweisen.

Durch die Auswahl eines Elastomers bzw. eines Elastomerbereichs und die Kombination mit einem Bereich aus energieabsorbierendem Material mit derartigen Eigenschaften ist sichergestellt, dass die Elastizität der Schaufel über die gesamte Einsatzdauer erhalten bleibt. Nach dem Aufprall eines Wassertropfens kehren die gedehnten Molekülketten des Elastomers weitgehend in ihre Ausgangslage zurück. Insbesondere weist der Bereich aus energieabsorbierendem Material eine hohe Rückprall-Elastizität auf, was vorteilhaft ist im Zusammenhang mit der Tropfenerosion, und wodurch die Dämpfung gering und die innere Erwärmung bei dynamischen Belastungen entsprechend niedrig sind. Die Rückprall-Elastizität ist das Verhältnis der wieder gewonnenen Energie zur aufgewendeten Energie in %. Je größer die Elastizität, desto weniger Verformungsenergie wird in Wärme umgewandelt. Die Wärme, die nicht an die Umgebung abgegeben werden kann, würde beispielsweise den hochelastischen Elastomerbereich und/oder den Bereich aus energieabsorbierendem Material und/oder das Gummimaterial während der dynamischen Belastung aufheizen. Daher ist eine Schaufel bevorzugt, deren hochelastischer Elastomerbereich eine Rückprall-Elastizität von mehr als 25 %, vorzugsweise von mehr als 30%, aufweist. Polyurethan-Kautschuke oder Ethylen-Propylen-Kautschuke bzw. Ethylen-Propylen-Dien-Kautschuke verfügen über Rückprall-Elastizitäten im Bereich zwischen 35 bis 60 % bzw. 40 bis 75 %. Daher eignen sich derartige Kautschuke besonders als hochelastische Elastomerbereiche.

Um den Widerstand gegen das Eindringen von Partikeln bzw. Wassertropfen zu erhöhen, ist es vorzugsweise vorgesehen, dass die Oberfläche der Schaufel mit einer Beschichtung aus energieabsorbierendem Material ausgebildet ist. Bevorzugt befindet sich diese Beschichtung auf der Oberfläche der Schaufel, Laufbeschaufelung oder Leitbeschaufelung einer Turbine.

Zusätzlich kann vorgesehen sein, dass die verwendeten Materialien der Schaufel, insbesondere das Elastomer des hochelastischen Bereichs und/oder der Bereich aus energieabsorbierendem Material, Shore-Härten von größer 60, vorzugsweise von mehr als 70, aufweisen. Je höher die Shore-Härte, desto größer ist die Härte des Elastomers bzw. des vulkanisierten Kautschuks und umso geringer ist die Eindringtiefe der aufprallenden Wassertropfen. Bevorzugt sind insbesondere Ethylen-Propylen-Dien-Kautschuke für den hochelastischen Bereich mit einer Shore-Härte von bis zu 90.

Bei einem Bombardement von Wassertropfen der Größe von 20-400 µm, wobei ca. 100 µm am häufigsten auftritt, auf die Schaufel, insbesondere bei einer Aufprallgeschwindigkeit der Wassertropfen von 490 m/s oder mehr, ist beispielsweise durch die Oberflächenbeschichtung mit energieabsorbierendem Material, insbesondere in Kombination mit einem hochelastischen Elastomerbereich der Schaufel, Laufbeschaufelung oder Leitbeschaufelung einer Turbine ist sichergestellt, dass durch die hohen dynamischen Belastungen keine Mikrorisse in der Schaufeloberfläche hervorgerufen werden und sich diese möglicherweise durch die Schallwellen beim Aufprall weiterer Wassertropfen weiter ausbreiten. Daher ist insbesondere eine Schaufel, Laufbeschaufelung oder Leitbeschaufelung einer Turbine bevorzugt, die eine Oberflächenbeschichtung aus einem energieabsorbierendem Material und einen hochelastischen Elastomerbereich hat, vorgesehen, das energieabsorbierende Material und/oder das Material für den hochelastischen Elastomerbereich so zu wählen, dass es einen Weiterreißwiderstand von 10-50 N/mm, vorzugsweise von 20-50 N/mm, aufweist.

Hochelastische Elastomerschichten mit derartigen Materialeigenschaften verhindern die Erosion der Schaufel bzw. den Abtrag von Teilen der Schaufel bei einer Tropfenschlagerosionsbeanspruchung. Schaufeln, bei denen der Faserverbundwerkstoff der Schaufel mit derartig ausgebildeten, hochelastischen Elastomerschichten versehen ist, sind besonders erosionsbeständig und langlebig.

Des Weiteren ist eine Schaufel bevorzugt, bei der der hochelastische Elastomerbereich als Schicht ausgebildet ist, die mit harzdurchtränkten, insbesondere epoxidharzdurchtränkten Prepregs verbunden ist. Die erfindungsgemäßen Prepregs sind mit Harz bzw. Epoxidharz vorimprägnierte Fasern bzw. Fasermatten. D.h., Prepregs sind erfindungsgemäß insbesondere Halbwerkzeuge aus Endlosfasern und einer ungehärteten duroplastischen Kunststoffmatrix. Die Endlosfasern können als reine unidirektionale Schicht, als Gewebe oder Gelege vorliegen. Prepregs zeichnen sich durch einen hohen Faservolumenanteil aus. Es können verschiedenartige Fasertypen zu Prepregs verarbeitet sein. So können die Prepregs Glasfasern oder Aramidfasern aufweisen. Besonders bevorzugt sind die Prepregs jedoch aus Kohlenstofffasern ausgebildet. Durch die Verbindung der hochelastischen Elastomerschicht mit epoxidharzdurchtränkten Prepregs ist die Schaufel besonders zugfest und weist eine hohe Energieaufnahmefähigkeit auf. Derartige Schaufeln sind besonders tropfenschlagerosionsbeständig und damit langlebig.

Diese hochelastische Elastomerschicht ist vorzugsweise auf die Prepregs auflaminiert oder in die Prepregs einlaminiert. So kann eine direkte Verbindung durch Einlaminieren bzw. Auflaminieren von hochelastischen Elastomerschichten, insbesondere Kautschukfolien, in bzw. auf Prepregs im Autoklaven hergestellt sein. Bevorzugt sind dabei Elastomerschichten bzw. Kautschuksysteme und Prepregs die im gleichen Temperaturbereich vulkanisieren bzw. aushärten. In die hochelastischen Elastomerschichten können vorzugsweise Vernetzungsmittel eingearbeitet sein. Der Verbund Elastomer-Epoxid ist wegen der Verschlaufung der Molekülketten besonders fest. Durch die Verbindung von hochelastischen Elastomerschichten und epoxidharzdurchtränkten Prepregs entsteht ein fester Verbund mit einer mechanischen Bindung zwischen dem Elastomer und dem Epoxidharz mit sehr hohen Haftfestigkeiten.

Durch die kombinierte Anwendung von einem Faseverbundkunststoff mit einem hochelastischen Elastomerbereich mit einer energieabsorbierenden Oberflächenbeschichtung bei einer Schaufel, Laufbeschaufelung oder Leitbeschaufelung einer Turbine ist es möglich, dass die Erosion von Turbinenmaterialien aus Metallen oder Faserverbundsystemen, die bisher üblich ist, deutlich vermindert wird.

Die Bindung des Metalls mit den Kunststoffen kann durch entsprechende Haftvermittler und Zugabe von Klebern erfolgen. Die Haftvermittler dienen beispielsweise dazu, die Benetzbarkeit der Oberfläche zu erhöhen. Die Oberfläche kann vor der Anwendung eines Haftvermittlers vorteilhafterweise durch beispielsweise Sandstrahlen oder Schleifen vorbehandelt werden, damit die Oberfläche für den Einsatz des Haftvermittlers aktiviert ist.

Zusätzlich oder Alternativ zum Haftvermittler können Primer allein oder in Kombination mit einem Kleber zur Herstellung eines Verbundes zwischen der Oberfläche der Schaufel, Laufbeschaufelung oder Leitbeschaufelung einer Turbine und der Beschichtung aus energieabsorbierendem Material eingesetzt werden.

Als Kleber eignen sich beispielsweise Klebstoffe auf PU-und/oder Epoxidbasis. Mögliche Klebstoffe sind PU-Klebstoffe wie beispielsweise der PU-Klebstoff 5752 der Fa. Epple und der PU-Klebstoff 9691 der Fa. Delo, der Epoxid-Klebstoff DP760 der Firma 3M, der Epoxid-Klebstoff GP48 der Firma Gößl und Pfaff, sowie die als "Hysol-Klebstoff" bekannten Klebstoffe.

Unpolare Ethylen-Propylen-Dien-Kautschuke können nur bedingt verklebt werden. Dagegen kann eine direkte Verbindung durch Auflaminieren von Kautschukfolien auf Prepregs im Autoklaven hergestellt werden. Geeignet sind Kautschuksysteme /Harzsysteme (Prepregs) die im gleichen Temperaturbereich vulkanisieren und/oder aushärten.

Die Vulkanisation von Ethylen-Propylen-Dien-Kautschuken erfolgt beispielsweise bei Temperaturen zwischen 130°C und 170°C, entsprechende Prepregs und Harzsysteme, die im gleichen Temperaturintervall aushärten, können damit verbunden werden.

Folgende Schichtaufbauten können Schaufel, Laufbeschaufelung oder Leitbeschaufelung einer Turbine beispielsweise zeigen:

### Beispiel 1:

Faserverbund mit integrierter hochelastischer Elastomerschicht, die ein Prepreg aus einem Faserverbund mit einer Klebeschicht verbindet und darauf als oberste Schicht eine Metallfolie.

### Beispiel 2:

Faserverbund mit integrierter hochelastischer Elastomerschicht darauf eine Klebeschicht und als oberste Schicht eine Metallfolie.

### Beispiel 3:

Faserverbund mit integrierter hochelastischer Elastomerschicht darauf eine Schicht mit Haftvermittler und als oberste Schicht eine Metallfolie.

Die vorliegende Erfindung betrifft eine Schaufel einer Laufbeschaufelung oder einer Leitbeschaufelung, insbesondere einer Beschaufelung einer Turbinenstufe einer Turbine, wobei die Schaufel als Werkstoff einen Faserverbundwerkstoff umfasst. Ferner betrifft die Erfindung eine Laufbeschaufelung oder Leitbeschaufelung, insbesondere der Beschaufelung einer Turbinenstufe einer Turbine, sowie ein Verfahren zur Herstellung zumindest einer Schaufel einer Laufbeschaufelung oder einer Leitbeschaufelung, insbesondere einer Beschaufelung einer Turbinenstufe einer Turbine. Dazu offenbart die Erfindung eine Verbesserung einer Schaufel, Laufbeschaufelung oder Leitbeschaufelung einer Turbine gegen Tropfenerosion. Dazu wird eine Kombination aus einem energieabsorbierendem Material mit einem hochelastischen Elastomerbereich in oder auf der Schaufel, die bevorzugt aus Faserverbundkunststoff ist, vorgeschlagen.

## Patentansprüche

1. Schaufel einer Laufbeschaufelung oder einer Leitbeschaufelung, insbesondere einer Beschaufelung einer Turbinenstufe einer Turbine, wobei die Schaufel als Werkstoff einen Faserverbundwerkstoff umfasst, **dadurch gekennzeichnet, dass** die Schaufel wenigstens einen hochelastischen Elastomerbereich und einen Bereich aus energieabsorbierendem Material aufweist.

2. Schaufel nach Anspruch 1, **dadurch gekennzeichnet, dass** der Faserverbundwerkstoff der Schaufel ein kohlenstofffaserverstärkter Verbundwerkstoff ist.

3. Schaufel nach mindestens einem der vorhergehenden Ansprüche 1 oder 2, **dadurch gekennzeichnet, dass** der hochelastische Elastomerbereich integraler Bestandteil der Schaufel ist.

4. Schaufel nach mindestens einem der vorhergehenden Ansprüche 1 bis 3, **dadurch gekennzeichnet, dass** der hochelastische Elastomerbereich auf die Schaufeloberfläche der Schaufel auflaminiert oder in den Faserverbundwerkstoff der Schaufel einlaminiert ist.

5. Schaufel nach mindestens einem der vorhergehenden Ansprüche 1 bis 4, **dadurch gekennzeichnet, dass** der hochelastische Elastomerbereich aus vulkanisiertem Kautschuk ausgebildet ist oder vulkanisierten Kautschuk umfasst.

6. Schaufel nach mindestens einem der vorhergehenden Ansprüche 1 bis 5, **dadurch gekennzeichnet, dass** als energieabsorbierendes Material ein Metall, eine Metalllegierung, eine Keramik, oder ein besonders harter Kunststoff eingesetzt wird.

7. Schaufel nach Anspruch 5, **dadurch gekennzeichnet, dass** der vulkanisierte Kautschuk ein Polyurethan, ein Ethylen-Propylen-Kautschuk, ein Ethylen-Propylen-DienKautschuk, ein Styrol-Butadien-Kautschuk, ein ButylKautschuk, ein Chloropren-Kautschuk, ein Epichlorhydrin-Kautschuk, ein Nitril-Kautschuk, ein hydrierter Nitril-Kautschuk, ein Polyacrylat-Kautschuk, ein Ethylen-Acrylat-Kautschuk, ein Fluor-Kautschuk, ein Silikon-Kautschuk und/oder ein Fluorsilikon ist.

8. Schaufel nach mindestens einem der vorhergehenden Ansprüche 1 bis 7, **dadurch gekennzeichnet, dass** das Elastomer des hochelastischen Elastomerbereichs eine Rückprallelastizität von mindestens 20%, vorzugsweise mindestens 30%, aufweist und/oder eine Shore-Härte von wenigstens 60, vorzugsweise von wenigstens 70, aufweist und/oder eine Reißdehnung von 300% bis 1000%, insbesondere eine Reißdehnung von 800% bis 1000%, aufweist und/oder eine Reißfestigkeit von wenigstens 25 N/mm², vorzugsweise von 40-50 N/mm², aufweist und/oder einen Weiterreißwiderstand von 10-50 N/mm, vorzugsweise von 20-50 N/mm, aufweist.

9. Schaufel nach mindestens einem der vorhergehenden Ansprüche 1 bis 8, **dadurch gekennzeichnet, dass** der hochelastische Elastomerbereich mit harzdurchtränkten, insbesondere epoxidharzdurchtränkten, Prepregs verbunden ist.

10. Laufbeschaufelung oder Leitbeschaufelung, insbesondere der Beschaufelung einer Turbinenstufe einer Turbine, **dadurch gekennzeichnet, dass** die Laufbeschaufelung oder die Leitbeschaufelung eine Vielzahl von Schaufeln umfasst, die nach mindestens einem der vorhergehenden Ansprüche 1 bis 9 ausgebildet sind.

11. Verfahren zur Herstellung zumindest einer Schaufel nach einem der Ansprüche 1 bis 9, einer Laufbeschaufelung oder einer Leitbeschaufelung nach Anspruch 10, insbesondere einer Beschaufelung einer Turbinenstufe einer Turbine, wobei der hochelastische Elastomerbereich bei der Herstellung der Schaufel monolithisch mit dieser hergestellt wird.
